# EUROPÄISCHE PATENTSCHRIFT

(11) **EP 1 377 626 B1**
(45) Veröffentlichungstag und Bekanntmachung des Hinweises auf die Patenterteilung: **21.02.2007**
(21) Anmeldenummer: 02735174.1
(22) Anmeldetag: 25.03.2002
(51) Int. Cl.: C08G 69/48, D06M 15/59, D06M 15/61

(54) **VERWENDUNG MODIFIZIERTER POLYAMINOAMIDE ZUR HYDROPHILIERUNG VON OBERFLÄCHEN**
USE OF MODIFIED POLYAMINE AMIDES FOR HYDROPHILIZING SURFACES
UTILISATION DE POLYAMINOAMIDES MODIFIES POUR L'HYDROPHILISATION DE SURFACES

(30) Priorität: 28.03.2001 DE 10115256
(43) Veröffentlichungstag der Anmeldung: 07.01.2004
(73) Patentinhaber: BASF Aktiengesellschaft, 67056 Ludwigshafen (DE)
(72) Erfinder: MOCK-KNOBLAUCH, Cordula, 67063 Ludwigshafen (DE); ZIRNSTEIN, Michael, 69198 Schriesheim (DE); MEFFERT, Helmut, 91438 Bad Windsheim, (DE)
(74) Vertreter: Kinzebach, Werner
(86) Internationale Anmeldenummer: PCT/EP2002/003346
(87) Internationale Veröffentlichungsnummer: WO 2002/077069

(56) Entgegenhaltungen:
- WO-A-98/27263
- DE-A- 3 300 866
- GB-A- 1 218 394

## Beschreibung

Die vorliegende Erfindung betrifft die Verwendung bestimmter Polyaminoamide zur Hydrophilierung der Oberflächen teilchen-, linien-, flächenförmiger- oder dreidimensionaler Gebilde.

Gegenstände aus synthetischen Materialien, wie duroplastische oder thermoplastische Kunststoffe, weisen in der Regel hydrophobe Oberflächeneigenschaften auf. Vielfach sind hydrophobe Eigenschaften jedoch unerwünscht, wenn die Gegenstände beklebt, beschichtet, bedruckt, gefärbt oder lackiert werden sollen, da die meisten Klebstoffe, Beschichtungsmittel oder Anstrichmittel auf hydrophoben Oberflächen nur unzureichende Haftung zeigen. Hydrophobe Eigenschaften sind auch bei flächenförmigen textilen Gebilden, wie insbesondere Vliesstoffen unerwünscht. Vliesstoffe werden z. B. als Putz- und Wischtücher, Spültücher und Servietten verwendet. Bei diesen Anwendungen ist es wichtig, dass z. B. verschüttete Flüssigkeiten, wie Milch, Kaffee usw. beim Aufwischen rasch und vollständig aufgesaugt und feuchte Oberflächen möglichst vollständig getrocknet werden. Ein Putztuch saugt Flüssigkeiten umso rascher auf, je schneller deren Transport auf der Faseroberfläche erfolgt, wobei Fasern mit hydrophiler Oberfläche von wässrigen Flüssigkeiten leicht und rasch benetzt werden.

Um die Oberflächen von Folien oder Formkörpern zu hydrophilieren sind verschiedene Verfahren üblich. Z. B. können die Oberflächen von Kunststoffartikeln durch gasförmiges Fluor aktiviert werden. Dieses Verfahren erfordert allerdings das Arbeiten mit dem hochgiftigen Gas Fluor unter einem erhöhten apparativen Aufwand. Daneben werden Korona- oder Plasmabehandlungen angewandt, um die Hydrophilie der Oberfläche verschiedener Materialien wie Kunststoffen oder Metallen zu erhöhen.

Zur Verbesserung der Wasseraufnahmeeigenschaften von Vliesstoffen werden auch oberflächenaktive hydrophilierende Agentien, wie Emulgatoren, Tenside oder Netzmittel eingesetzt. Hierdurch wird eine ausgezeichnete Anfangshydrophilie erreicht. Diese Vliesstoffe weisen aber den Nachteil auf, dass die hydrophilen Agentien durch Wasser oder andere wässrige Medien allmählich ausgewaschen werden.

Nach mehrmaligem Wasserkontakt wird das Erzeugnis zunehmend hydrophober. Ein weiterer Nachteil der bekannten oberflächenaktiven Agentien besteht in der starken Herabsetzung der Grenzflächenspannung von Wasser, so dass in vielen Anwendungen, insbesondere bei Hygiene- und Windelvliesen, die Permeationsneigung und das Netzvermögen der aufgesaugten Flüssigkeit unerwünscht erhöht ist.

Die WO 98/27263 offenbart beständig hydrophile Polymerbeschichtungen für Polyester-, Polypropylen- und ähnliche Fasern. Die Beschichtung enthält bestimmte Polyoxyproylamine oder Polypropylenoxidpolymere und Ethylenterephthalateinheiten enthaltende hydrophile Polyestercopolymere.

Die WO 97/00351 beschreibt dauerhaft hydrophile Polymerbeschichtungen für Polyester-, Polyethylen- oder Polypropylenfasern und -gewebe, die hydrophile Copolyester sowie Polypropylenoxidpolymere enthalten.

Die WO 94/00418 beschreibt kettenverlängerte Polyamine mit wenigstens einem Fettsäurerest. Die Verbindungen dienen unter anderem als Schlichtemittel für Fasern.

Die GB 1218394 beschreibt ein Verfahren zur Herstellung eines wasserlöslichen wärmehärtbaren Polymers, bei dem eine Dicarbonsäure mit einem Polyalkylenpolyamin zu einem Polyaminoamid umgesetzt wird, welches mit einem Alkylenoxid umgesetzt wird. Das Reaktionsprodukt wird dann weiter mit Epichlorhydrin oder Epibromhydrin umgesetzt.

Der vorliegenden Erfindung liegt die Aufgabe zugrunde, weitere hydrophilierend wirkende Verbindungen bereitzustellen, die sich durch hohe hydrophilierende Wirkung und hohe Permanenz auf den damit behandelten Oberflächen auszeichnen.

Die Erfindung betrifft die Verwendung von Polyaminoamiden, worin wenigstens ein Teil der Amin-Stickstoffatome Reste der allgemeinen Formel I, II und/oder III trägt, zur Hydrophilierung der Oberfläche teilchen-, linien-, flächenförmiger oder dreidimensionaler Gebilde, 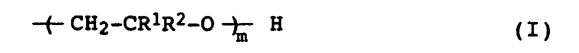 worin
- R¹: für Wasserstoff, C₁-C₂₈-Alkyl, C₂-C₂₈-Alkenyl, C₆-C₁₆-Aryl oder C₇-C₁₆-Arylalkyl steht,
- R²: für Wasserstoff oder Methyl steht, und
- m: für 1 bis 100 steht;

R³-CO- (II)

worin
- R³: für Wasserstoff, C₁-C₂₇-Alkyl, C₂-C₂₇-Alkenyl, C₆-C₁₆-Aryl oder C₇-C₁₆-Arylalkyl steht, wobei die Alkyl-, Alkenyl-, Aryl- und Arylalkylgruppen einen oder mehrere Substituenten tragen können, die unter Hydroxy, Alkoxy, Alkoxycarbonyl oder NE₁E₂ ausgewählt sind, worin E₁ und E₂ gleich oder verschieden sein können und für Wasserstoff, Alkyl oder Acyl stehen;

R⁴- (III)

worin
- R⁴: für C₁-C₂₈-Alkyl, C₂-C₂₈-Alkenyl, C₆-C₁₆-Aryl oder C₇-C₁₆-Arylalkyl steht, wobei die Alkyl-, Alkenyl-, Aryl- und Arylalkylgruppen einen oder mehrere Substituenten tragen können, die unter Hydroxy, Alkoxy, Alkoxycarbonyl oder NE₁E₂ ausgewählt sind, worin E₁ und E₂ die bereits angegebene Bedeutung haben.

Bevorzugt verwendete Polyaminoamide umfassen Wiederholungseinheiten der allgemeinen Formel IV 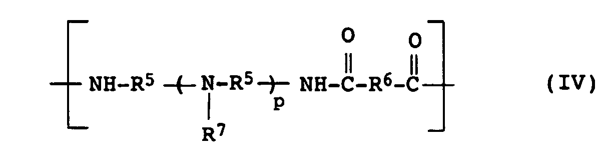 worin
- p: für eine ganze Zahl von 1 bis 20, vorzugsweise 2 bis 10, insbesondere 2 bis 5, steht,

- R⁵: für gleiches oder verschiedenes C₂-C₈-Alkylen, vorzugsweise C₂-C₃-Alkylen, steht,
- R⁶: für den Rest einer Dicarbonsäure (nach Entfernen der Carboxylgruppen) steht, der in den jeweiligen Wiederholungseinheiten gleich oder verschieden sein kann; vorzugsweise für eine chemische Bindung oder C₁-C₈-Alkylen, das von einer Doppelbindung, einem Sauerstoffatom oder einer Iminogruppe unterbrochen oder eine oder mehrere Hydroxylgruppen und/oder Aminogruppen tragen kann,
- R⁷: für Wasserstoff oder einen Rest der allgemeinen Formeln I, II und/oder III steht, wobei wenigstens ein Teil der Reste R⁷ von Wasserstoff verschieden ist.

Neben den Wiederholungseinheiten der Formel IV kann das Polyaminoamid fakultativ Wiederholungseinheiten der Formel V aufweisen, 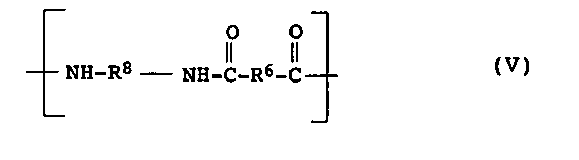 worin
- R⁶: die bereits angegebene Bedeutung hat und
- R⁸: für C₂-C₅₀₀-Alkylen steht, das durch Sauerstoffatome oder tertiäre Stickstoffatome unterbrochen sein kann, die durch wenigstens zwei Kohlenstoffatome voneinander getrennt sind, oder mit gesättigten oder ungesättigten carbo- oder heterocyclischen, vorzugsweise 6-gliedrigen, Ringen anelliert sein kann.

Typische Beispiele für R⁸ sind
-(CH₂)ₙ- mit n = 1 bis 6 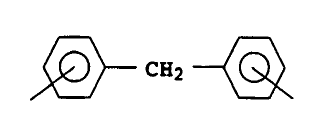 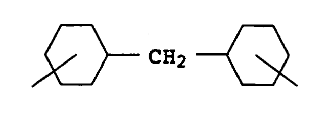 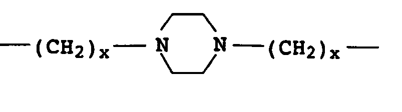 mit x = 2 oder 3 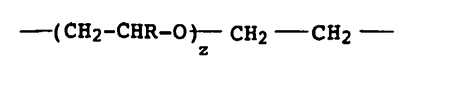 mit R = H oder CH₃
z = 2 bis 100 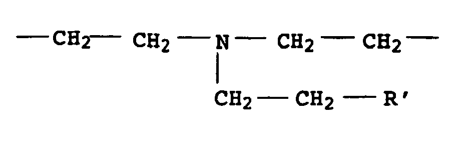 worin R' für einen Wiederholungseinheiten der Formeln IV und/oder V umfassen den Rest steht.

Vorzugsweise beträgt der Anteil der Wiederholungseinheiten der Formel IV wenigstens 20 Mol-%, insbesondere wenigstens 50 Mol-%, bezogen auf die Summe der Wiederholungseinheiten der Formeln IV und V.

In der Regel beträgt die Zahl der Wiederholungseinheiten der Formel IV bzw. die Summe der Wiederholungseinheiten der Formeln IV und V, falls letztere anwesend sind, in den erfindungsgemäß verwendeten Polyaminoamiden 5 bis 250, vorzugsweise 20 bis 100.

Vorzugsweise tragen 5 bis 100 %, insbesondere 15 bis 100 %, der Amino-Stickstoffatome des Polyaminoamids eine Seitenkette der Formel I, II oder III.

Hier und im Folgenden bedeutet C₁-C₂₇-Alkyl einen linearen oder verzweigten Alkylrest mit 1 bis 27 Kohlenstoffatomen, z. B. Methyl, Ethyl, n-Propyl, Isopropyl, n-Butyl, 1-Methylpropyl, 2-Methylpropyl, 1,1-Dimethylethyl, n-Pentyl, 1-Methylbutyl, 2-Methylbutyl, 3-Methylbutyl, n-Hexyl, n-Octyl, Ethylhexyl, 1,1,3,3-Tetramethylbutyl, n-Nonyl, n-Decyl, n-Undecyl, n-Dodecyl, n-Tridecyl, Myristyl, Pentadecyl, Palmityl (=Cetyl), Heptadecyl, Octadecyl, Nonadecyl, Arachinyl, Behenyl, Lignocerenyl, Cerotinyl, Melissinyl etc. Bevorzugt sind hierunter lineare oder verzweigte Reste mit 2 bis 8 und insbesondere 2 bis 6 Kohlenstoffatomen.

C₁-C₂₈-Alkyl bedeutet C₁-C₂₇-Alkyl wie vorstehend definiert und zusätzlich einen linearen oder verzweigten Alkylrest mit 28 Kohlenstoffatomen.

C₂-C₂₇-Alkenyl steht für einen linearen oder verzweigten Kohlenwasserstoffrest mit 2 bis 27 Kohlenstoffatomen, der eine, zwei oder drei Doppelbindungen, die konjugiert oder nicht konjugiert sein können, aufweist. Beispiele hierfür sind Vinyl, Allyl, 1-Methylvinyl, Methallyl, 1-Butenyl, Octenyl, Nonenyl, Decenyl, Undecenyl, Dodecenyl, Tridecenyl, Tetradecenyl, Pentadecenyl, Hexadecenyl, Heptadecenyl, Octadecenyl, Nonadecenyl, Linolyl, Linolenyl, Elaostearyl etc. Bevorzugt sind hierunter lineare oder verzweigte Reste mit 2 bis 8 und insbesondere 2 bis 6 Kohlenstoffatomen.

C₂-C₂₈-Alkenyl steht für C₂-C₂₇-Alkenyl wie vorstehend definiert und zusätzlich für einen linearen oder verzweigten Alkylrest mit 28 Kohlenstoffatomen, der eine, zwei oder drei Doppelbindungen, die konjugiert oder nicht konjugiert sein können, aufweist.

C₆-C₁₆-Aryl steht für einen aromatischen Rest mit 6 bis 16 Kohlenstoffatomen, z. B. für Phenyl oder Naphthyl, das gegebenenfalls substituiert sein kann, z. B. mit einem, zwei oder drei Substituenten, ausgewählt unter Halogen, C₁-C₄-Alkyl, z. B. Methyl oder Ethyl, und C₁-C₄-Alkoxy, z. B. Methoxy oder Ethoxy.

C₇-C₁₆-Arylalkyl steht für einen Alkylrest mit vorzugsweise 1, 2, 3 oder 4 C-Atomen, der einen aromatischen Rest mit 6 bis 16 Kohlenstoffatomen, wie vorstehend definiert, trägt. Beispiele hierfür sind Benzyl, 1-Phenylethyl, 2-Phenylethyl.

In der Formel I steht R¹ für gleiche oder verschiedene Reste und vorzugsweise für Methyl, Ethyl, n-Propyl, n-Butyl, Phenyl oder Vinyl und R² vorzugsweise für Wasserstoff.

Eine besondere Ausführungsform der Erfindung sind Polyaminoamide mit Seitenketten der allgemeinen Formel Ia 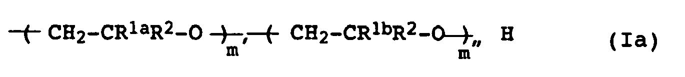 worin
- R^{1a} und R^{1b}: unabhängig voneinander für Wasserstoff, C₁-C₂₈-Alkyl, C₂-C₂₈-Alkenyl, C₆-C₁₆-Aryl, C₇-C₁₆-Arylalkyl stehen, wobei sich die Kohlenstoffzahl der Reste R^{1a} und R^{1b} um wenigstens 1 unterscheidet,
- R²: die bereits angegebene Bedeutung hat,
- m': für eine ganze Zahl von 1 bis 20, z. B. 1, und
- m": für eine ganze Zahl von 1 bis 99, vorzugsweise 1 bis 20, steht,
wobei m'+m"=m.

Vorzugsweise beträgt der über die Anzahl der Amino-Stickstoffatome im Polyaminoamid gemittelte Wert von m wenigstens 0,15, insbesondere wenigstens 0,25, besonders bevorzugt wenigstens 0,5, z. B. etwa 1. In der Regel überschreitet der Mittelwert den Wert 10 nicht.

In der Formel II ist der Rest R³ vorzugsweise unsubstituiert oder weist einen, zwei, drei oder vier Substituenten auf, die unter Hydroxy-, Alkoxy-, Alkoxycarbonyl- oder NE₁E₂ ausgewählt sind. Der maximal erreichbare Substitutionsgrad wird dabei in der Regel nur von der Kettenlänge des Restes R³ begrenzt.

Soweit R³ einen Hydroxysubstituenten trägt, leitet sich R³ vorzugsweise von einer Hydroxycarbonsäure durch Entfernen der Carboxylgruppe ab. Bevorzugte Hydroxycarbonsäuren sind z. B. C₂-C₇-Monohydroxycarbonsäuren, wie z. B. Glykolsäure, Milchsäure, 4-Hydroxybuttersäure, 5-Hydroxypentansäure, 6-Hydroxyhexansäure und Mischungen davon. Geeignete Monohydroxycarbonsäuren sind weiterhin C₈-C₂₈-Monohydroxycarbonsäuren, wie z. B. 10-Hydroxydecansäure, 11-Hydroxyundecansäure, 12-Hydroxystearinsäure, Rizinolsäure sowie Hydroxyfettsäuren, die z. B. durch Hydrierung von Epoxyfettsäuren erhältlich sind. Geeignete C₈-C₂₈-Dihydroxycarbonsäuren sind auch z. B. durch hydrolytische Ringöffnung von Epoxifettsäuren erhältlich.

Aminogruppen am Rest R³ sind vorzugsweise unsubstituiert. Alternativ tragen sie vorzugsweise eine oder zwei C₁-C₆-Alkylgruppen oder eine C₁-C₆-Acylgruppe.

Soweit der Rest R³ einen Aminosubstituenten trägt, leitet sich der Rest R³ vorzugsweise von einer C₁-C₂₇-Monoaminocarbonsäure durch Entfernen der Carboxylgruppe ab. Zu den geeigneten Aminocarbonsäuren zählen insbesondere 2-Aminocarbonsäuren wie Glycin, Alanin, Valin, Lysin, 6-Aminohexansäure, 11-Aminoundecansäure und deren Gemische.

Soweit der Rest R³ für einen Arylrest steht, leitet er sich vorzugsweise von einer aromatischen Carbonsäure, Hydroxycarbonsäure oder Aminocarbonsäure durch Entfernen der Carboxylgruppe ab. Dazu zählen vorzugsweise Benzoesäure, 2-Hydroxybenzoesäure, 3-Hydroxybenzoesäure, 4-Hydroxybenzoesäure, 2-Aminobenzoesäure, 3-Aminobenzoesäure, 4-Aminobenzoesäure, 1-Naphthalincarbonsäure, 2-Naphthalincarbonsäure, 1-Hydroxy-2-naphthoesäure, 2-Hydroxy-1-naphthoesäure, 2-Hydroxy-3-naphthoesäure, 6-Hydroxy-2-naphthoesäure, 3-Amino-1-naphthoesäure, 4-Amino-1-naphthoesäure, 8-Amino-1-naphthoesäure und Mischungen davon. Die zuvor genannten aromatischen Hydroxy- und/oder Aminocarbonsäuren können zusätzlich an den Hydroxy- und/oder Aminogruppen alkyliert oder acyliert sein. Bevorzugt sind C₁-C₆-Alkyl- oder Acylreste.

Besonders bevorzugt steht R³ für C₂-C₂₇-Alkyl, insbesondere für C₂-C₁₂-Alkyl, das vorzugsweise unsubstituiert ist oder eine, zwei oder drei Hydroxygruppen trägt.

In der Formel III steht der Rest R⁴ vorzugsweise für C₃-C₁₃-Alkyl, das vorzugsweise eine, zwei oder drei Hydroxygruppen trägt.

Polyaminoamide sind Polymere, deren Gerüstkette sowohl Amin- als auch Amidfunktionalitäten enthält. Sie sind durch Umsetzung von Polyalkylenpolyaminen mit Polycarbonsäuren, vorzugsweise in einem Molverhältnis von 1:0,5 bis 1:2, erhältlich.

Unter Polyalkylenpolyaminen werden Verbindungen verstanden, die aus einer gesättigten Kohlenwasserstoffkette mit terminalen Aminofunktionen, die von wenigstens einer sekundären Aminogruppe unterbrochen ist, bestehen. Sie können auch über tertiäre Stickstoffatome verzweigt sein. Zu den geeigneten Polyalkylenpolyaminen zählen Diethylentriamin, Triethylentetramin, Tetraethylenpentamin, Pentaethylenhexamin, Diaminopropylethylendiamin (= N,N'-Bis-(3-aminopropyl)-1,2-diaminoethan), Ethylenpropylentriamin, 3-(2-Aminoethyl)aminopropylamin, Dipropylentriamin sowie Polyethylenimine mit Molmassen von vorzugsweise 300 bis 20000, insbesondere von 300 bis 5000. Bevorzugt sind Poly-C₂-C₃-alkylenamine mit 3 bis 10 Stickstoffatomen. Hiervon sind Diethylentriamin, 3-(2-Aminoethyl)aminopropylamin, Dipropylentriamin und Diaminopropylethylendiamin besonders bevorzugt. Selbstverständlich können die Polyalkylenpolyamine im Gemisch untereinander eingesetzt werden.

Bei der Herstellung der Polyaminoamide können neben den vorgenannten Polyalkylenpolyaminen auch Diamine Verwendung finden, deren Kohlenwasserstoffkette gegebenenfalls von einem oder mehreren Sauerstoffatomen und/oder tertiären Stickstoffatomen unterbrochen ist. Vorzugsweise machen jedoch die Polyalkylenpolyamine wenigstens 20 Mol-%, insbesondere wenigstens 50 Mol-%, der eingesetzten Aminkomponente aus. Geeignete Diamine sind beispielsweise Ethylendiamin, Propylendiamin, 1,4-Diaminobutan, 1,6-Hexamethylendiamin, Neopentandiamin, 4,4'-Diaminodiphenylmethan, 4,4'-Diaminodicyclohexylmethan, 3,3'-Dimethyl-4,4'-diaminodiphenylmethan, N,N'-Bis(2-aminoethyl)-piperazin, N,N'-Bis(3-aminopropyl)-piperazin und Phenylendiamin.

Als Diamine kommen außerdem α,ω-Diaminoverbindungen, die sich von Polyalkylenoxiden oder Polytetrahydrofuran ableiten in Betracht. Die Polyalkylenoxide leiten sich z. B. von Ethylenoxid, Propylenoxid, Butylenoxid oder Gemischen davon ab. Sie enthalten üblicherweise 2 bis 100, vorzugsweise 2 bis 20, Alkylenoxideinheiten. Vorzugsweise geht man von Polyethylenoxiden, Polypropylenoxiden oder von Blockcopolymerisaten aus Ethylenoxid und Propylenoxid aus, die Ethylenoxid und Propylenoxid in beliebigen Verhältnissen einpolymerisiert enthalten können. Aus den genannten Polyalkylenoxiden bzw. Polytetrahydrofuran erhält man α**,**ω**-**Diamine, indem man diese mit Ammoniak unter Druck umsetzt.

Als Polycarbonsäuren zur Herstellung der Polyaminoamide kommen Di- oder höhere Carbonsäuren in Betracht. Geeignete Dicarbonsäuren sind insbesondere solche mit 2 bis 10 Kohlenstoffatomen, wie Oxalsäure, Malonsäure, Bernsteinsäure, Weinsäure, Maleinsäure, Itaconsäure, Glutarsäure, Adipinsäure, Korksäure, Sebacinsäure, Phthalsäure und Terephthalsäure. Weiterhin geeignet sind zweibasische Aminosäuren, wie Iminodiessigsäure, Asparaginsäure und Glutaminsäure. Geeignete höhere Polycarbonsäuren sind beispielsweise Butantetracarbonsäure, Propantricarbonsäure und Zitronensäure. Bevorzugte Säuren sind Adipinsäure, Glutarsäure, Asparaginsäure und Iminodiessigsäure. Selbstverständlich können die Polycarbonsäuren im Gemisch untereinander eingesetzt werden.

Die Polycarbonsäuren können in Form der freien Säuren oder als Carbonsäurederivate, wie Anhydride, Ester, Amide oder Säurehalogenide, insbesondere -chloride, eingesetzt werden. Beispiele für solche Derivate sind Anhydride, wie Maleinsäureanhydrid, Bernsteinsäureanhydrid, Phthalsäureanhydrid und Itaconsäureanhydrid; Adipinsäuredichlorid; Ester mit vorzugsweise C₁-C₂-Alkoholen, wie Adipinsäuredimethylester, Adipinsäurediethylester, Weinsäuredimethylester und Iminodiessigsäuredimethylester; Amide, wie Adipinsäurediamid, Adipinsäuremonoamid und Glutarsäurediamid. Vorzugsweise werden die freien Carbonsäuren oder die Carbonsäureanhydride eingesetzt.

Die Polykondensation des Polyamins und der Polycarbonsäure erfolgt in üblicher Weise durch Erwärmen des Polyamins und der Polycarbonsäure, z. B. auf Temperaturen von 100 bis 250 °C, vorzugsweise 120 bis 200 °C, und Abdestillieren des bei der Kondensation entstehenden Reaktionswassers. Beim Einsatz der genannten Carbonsäurederivate kann die Kondensation auch bei niedrigeren als den angegebenen Temperaturen durchgeführt werden. Die Herstellung der Polyaminoamide kann ohne Zusatz eines Katalysators oder aber unter Verwendung eines sauren oder basischen Katalysators durchgeführt werden. Geeignete saure Katalysatoren sind beispielsweise Säuren, wie Lewis-Säuren, z. B. Schwefelsäure, p-Toluolsulfonsäure, Phosphorige Säure, Hypophosphorige Säure, Phosphorsäure, Methansulfonsäure, Borsäure, Aluminiumchlorid, Bortrifluorid, Tetraethylorthotitanat, Zinndioxid, Zinnbutyldilaurat oder Gemische davon. Geeignete basische Katalysatoren sind beispielsweise Alkoholate, wie Natriummethylat oder Natriumethylat, Alkalimetallhydroxide, wie Kaliumhydroxid, Natriumhydroxid oder Lithiumhydroxid, Erdalkalimetalloxide, wie Magnesiumoxid oder Calciumoxid, Alkali- und Erdalkalimetallcarbonate, wie Natrium-, Kalium- und Calciumcarbonat, Phosphate, wie Kaliumphosphat, und komplexe Metallhydride, wie Natriumborhydrid. Der Katalysator wird, falls eingesetzt, im Allgemeinen in einer Menge von 0,05 bis 10 Gew.-%, vorzugsweise 0,5 bis 1 Gew.-%, bezogen auf die Gesamtmenge der Ausgangsstoffe, verwendet.

Die Umsetzung kann in einem geeigneten Lösungsmittel oder vorzugsweise lösungsmittelfrei durchgeführt werden. Bei Verwendung eines Lösungsmittels sind beispielsweise Kohlenwasserstoffe, wie Toluol oder Xylol, Acetonitril, N,N-Dimethylformamid, N,N-Dimethylacetamid, N-Methylpyrrolidon, Diethylenglycoldimethylether, Ethylenglycoldimethylether, Ethylencarbonat, Propylencarbonat und dergleichen geeignet. Im Allgemeinen wird das Lösungsmittel während der Umsetzung oder nach beendeter Umsetzung abdestilliert. Diese Destillation kann gegebenenfalls unter Schutzgas, wie Stickstoff oder Argon, erfolgen.

Polyaminoamide mit Seitenketten der Formel I sind durch Umsetzung der Polyaminoamide mit Epoxiden der Formel VI erhältlich

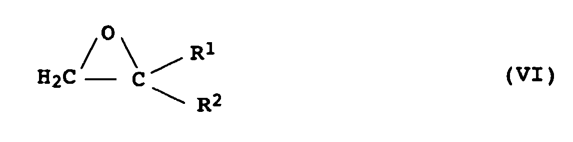

Hierbei bilden sich an allen oder einem Teil der Aminogruppen der Polyaminoamide Seitenketten der allgemeinen Formel I. Der Mittelwert von m bestimmt sich nach der molaren Menge an Epoxid, bezogen auf die zur Verfügung stehenden Amin-Stickstoffatome im Polyaminoamid.

Beispiele für bevorzugte Epoxide der Formel VI sind Propylenoxid sowie die Epoxide des 1-Butens (R¹ = Ethyl, R² = H; Butylenoxid), des 1-Pentens (R¹ = Propyl, R² = H), des 1-Hexens (R¹ = n-Butyl, R² = H), des Styrols (R¹ = Phenyl, R² = H) und des Butadiens (R¹ = Vinyl, R² = H).

Erfindungsgemäß verwendbare Polyaminoamide mit Seitenketten der oben angegebenen Formel Ia werden erhalten, indem man die Polyaminoamide zuerst mit Epoxiden der Formel VI umsetzt, worin R¹ die für R^{1a} angegebene Bedeutung hat und die dabei erhaltenen primären Alkoxylierungsprodukte mit einem Epoxid der Formel VI umsetzt, worin R¹ die für R^{1b} angegebene Bedeutung hat. So kann man z. B. das Polyaminoamid zuerst mit Butylenoxid, Pentenoxid oder Styroloxid umsetzen und das primäre Reaktionsprodukt dann mit Ethylenoxid und/oder Propylenoxid weiter umsetzen.

Zum Erhalt von Polyaminoamiden mit Seitenketten der Formel I, worin der Mittelwert von m über die Amin-Stickstoffatome 1 oder weniger beträgt, setzt man die Polyaminoamide in der Regel in der Abwesenheit eines Katalysators mit einem Epoxid um. In der Regel setzt man hierzu eine wässrige Lösung des Polyaminoamids ein. Wenn längere Ketten erwünscht sind, wird das primäre Alkoxylierungsprodukt dann in Gegenwart eines sauren oder basischen Katalysators in einem wasserfreien Lösungsmittel mit dem gleichen oder einem anderen Alkylenoxid umgesetzt. Als saure Katalysatoren eignen sich Säuren, wie Schwefelsäure, Paratoluolsulfonsäure oder Lewis-Säuren, wie Tetraethylorthotitanat und dergleichen. Geeignete basische Katalysatoren sind Basen, wie Kaliumhydroxid, Kalium-t-butylat oder Natriummethylat.

Als Lösungsmittel eignen sich C₁-C₄-Alkanole, Tetrahydrofuran, Dioxan, Dimethylformamid und deren Mischungen. Man kann auch aliphatische oder aromatische Kohlenwasserstoffe, wie Hexan, Cyclohexan, Toluol, Xylole, und ähnliche Lösungsmittel einsetzen.

Die Reaktionstemperatur beträgt in der Regel mehr als 40 °C und beträgt vorzugsweise 70 bis 150 °C, insbesondere 75 bis 110 °C.

Die Umsetzung kann in den hierfür üblichen Reaktoren erfolgen. Bei flüchtigen Einsatzstoffen, wie Butylenoxid oder bei Reaktionstemperaturen oberhalb 100 °C arbeitet man vorzugsweise in geschlossenen Reaktionsgefäßen. Die Anwendung von erhöhtem Druck ist grundsätzlich nicht erforderlich. Sie kann jedoch bei Umsetzung flüchtiger Komponenten von Vorteil sein. Der Reaktionsdruck kann dann bis zu 50 bar, vorzugsweise bis zu 10 bar betragen.

Erfindungsgemäße Polyaminoamide mit Seitenketten der Formel II sind durch Umsetzung von Polyaminoamiden mit einer Verbindung der Formel VII

R³-CO-X (VII)

worin

R³ die bereits angegebene Bedeutung hat, erhältlich. X steht für eine nucleophil verdrängbare Abgangsgruppe, wie insbesondere Hydroxyl, Alkoxy, Acyloxy oder Halogen, insbesondere Chlor. Bei der Verbindung der Formel VI handelt es sich demzufolge um eine Carbonsäure der Formel R³-COOH oder einen Ester, insbesondere ein Anhydrid oder ein Halogenid, insbesondere ein Chlorid davon.

Die Amidierung kann unter üblichen Bedingungen ohne Zusatz eines Katalysators oder unter Verwendung eines sauren oder basischen Katalysators durchgeführt werden. Geeignete Katalysatoren sind diejenigen, die vorstehend mit Bezug auf die Herstellung der zugrunde liegenden Polyaminoamide genannt sind. Die Umsetzung kann in einem geeigneten Lösungsmittel oder vorzugsweise lösungsmittelfrei durchgeführt werden. Geeignete Lösungsmittel und Reaktionsbedingungen sind die vorstehend in Bezug auf die Herstellung der zugrunde liegenden Polyaminoamide genannten.

Vorzugsweise sind etwa 5 bis 100 %, insbesondere 15 bis 90 %, der Amino-Stickstoffatome im Polyaminoamid acyliert.

Anstatt das vorgebildete Polyaminoamid mit der Carbonsäure R³COOH oder einem Derivat davon umzusetzen, kann man diese alternativ bereits bei der Herstellung des Polyaminoamids zugeben. Erfindungsgemäß verwendbare Polyaminoamide mit Seitenketten der Formel II sind demzufolge durch Polykondensation eines Polyamins mit einer Polycarbonsäure und einer Monocarbonsäure der Formel R³COOH erhältlich. Die Polycarbonsäure bzw. die Monocarbonsäure der Formel R³COOH können als solche oder in Form eines Derivats, wie eines Anhydrids, Esters oder Halogenids eingesetzt werden. Vorzugsweise setzt man das Polyalkylenpolyamin, die Polycarbonsäure und die Monocarbonsäure in einem molaren Verhältnis von 1:(0,5-1,5):(0,05-3) um.

Weiter alternativ kann man vor der Herstellung des Polyaminoamids das Polyamin partiell mit einer Monocarbonsäure der Formel R³COOH oder eines Derivats davon amidieren und anschließend mit einer Polycarbonsäure oder einem Derivat davon zu einem erfindungsgemäß verwendbaren Polyaminoamid mit Seitenketten der Formel II umsetzen.

Erfindungsgemäße Polyaminoamide mit Seitenketten der Formel III sind durch Umsetzung eines Polyaminoamids mit einem Alkylierungsmittel der Formel VIII erhältlich,

R⁴-Y (VIII)

worin R⁴ die bereits angegebene Bedeutung hat und Y für eine nucleophil verdrängbare Abgangsgruppe, wie Halogen, insbesondere Chlor, Brom oder Iod, oder eine aktivierte Hydroxylgruppe, wie Tosyloxy, steht.

Erfindungsgemäß eingesetzte Polyaminoamide werden auch erhalten, wenn man Polyaminoamide, worin die Amin-Stickstoffatome zum Teil Seitenketten der Formel II und/oder III tragen, wie beschrieben mit Epoxiden der Formel VI umsetzt. Weiterhin kann zuerst ein Teil der Amin-Stickstoffatome mit Resten der Formel II und die restlichen Amin-Stickstoffatome zumindest teilweise mit Resten der Formel III modifiziert werden oder umgekehrt.

Die Polyaminoamide mit Seitenketten der Formel I, II und/oder III eignen sich in vorteilhafter Weise zur Hydrophilierung der Oberfläche teilchen-, linien-, flächenförmiger oder dreidimensionaler Gebilde.

Teilchenförmige Gebilde sind insbesondere solche mit einer Teilchengröße von 1 nm bis 10 mm, insbesondere 10 nm bis 1 mm, die vorzugsweise in einem Medium dispergierbar oder dispergiert sind. Als Beispiele lassen sich Pigmente, mineralische oder metallische Füllstoffe oder unbelebte organische Materialien nennen.

Unter linienförmige Gebilden werden insbesondere Fasern, Filamente, Garne, Fäden und dergleichen verstanden. Derartige Gebilde werden auch als textile linienförmige Gebilde bezeichnet.

Unter linienförmigen textilen Gebilden werden im Rahmen der vorliegenden Anmeldung auch Textilverbundstoffe, wie z. B. Teppiche, kaschierte und laminierte Textilien etc. verstanden.

Flächenförmige Gebilde sind insbesondere textile Gebilde, wie Gewebe, Gewirke, Filze, Vliese oder Vliesstoffe, wobei Letztere bevorzugt sind. Zur Herstellung eines Vliesstoffs wird ein Gefüge von Fasern (Vlies) abgelegt, das anschließend nach unterschiedlichen Verfahren zu Vliesstoffen verfestigt wird. Z. B. wird das Vlies mit einem wässrigen Bindemittel, z. B. einem Polymerlatex, behandelt und anschließend, gegebenenfalls nach Entfernung von überschüssigem Bindemittel, getrocknet und gegebenenfalls gehärtet. Flächenförmige Gebilde sind auch Folien, Papier und vergleichbare zweidimensionale Gebilde.

Dreidimensionale Gebilde sind allgemein Formkörper unterschiedlichster Dimensionen. Dazu zählen insbesondere Formkörper aus Holz, Papier, Metallen, Kunststoffen, keramischen Trägern, Geweben aus natürlichen oder synthetischen Fasern in Form von Fluffs, Tissues etc.

Bevorzugte Ausgestaltungen der erfindungsgemäß hydrophilierten Gebilde sind linien- oder flächenförmige textile Gebilde. Andere bevorzugte Ausgestaltungen des erfindungsgemäßen Gebildes sind Kunststofffolien oder Kunststoffformkörper. Die erfindungsgemäß hydrophilierten linien- oder flächenförmigen textilen Gebilde eignen sich besonders zur Verwendung in Hygieneartikeln, insbesondere Einweg-Hygieneartikeln, wie Windeln, Binden, Slipeinlagen, Wundverbänden und dergleichen.

Unter Hydrophilierung wird eine Verbesserung der Benetzbarkeit mit Wasser bzw. einer wässrigen Flüssigkeit verstanden. Eine verbesserte Benetzbarkeit geht in der Regel einher mit einer schnelleren und/oder vermehrten Flüssigkeitsaufnahme und/oder einer verbesserten Flüssigkeitsretention, im Allgemeinen auch unter Druck.

Die erfindungsgemäß hydrophilierten Gebilde eignen sich im Allgemeinen vorteilhaft für alle Einsatzbereiche, bei denen Wasser oder wässrige Flüssigkeiten mit in unmodifiziertem Zustand im Wesentlichen hydrophoben Materialien in Kontakt kommen. Dazu zählt insbesondere das rasche Aufsaugen und/oder der rasche Transport von Wasser in an sich hydrophobe Materialien. Die Gebilde sind weiterhin im Allgemeinen dort vorteilhaft einsetzbar, wo durch Hydrophilierung verbesserte Hafteigenschaften, verbesserte antistatische Eigenschaften, verbesserte Antibeschlageigenschaften, ein verbesserter Griff- und/oder ein verbesserter Tragekomfort erreicht werden kann.

Die erfindungsgemäß hydrophilierten Gebilde eignen sich vorteilhaft in oder als Synthesefasern, Geweben, Gewirken, Vliesstoffen, Filzen, Textilverbundstoffen, wie z. B. Teppichen, kaschierten und laminierten Textilien etc. Sie eignen sich weiterhin in vorteilhafter Weise für den Einsatz in Windeln, Hygieneeinlagen, Putz- und Wischtüchern, Spültüchern, Servietten, Landwirtschafts- und/oder Geotextilien sowie für Filteranwendungen.

Die eingesetzten Gebilde umfassen wenigstens ein natürliches oder synthetisches polymeres Material.

Beispiele für derartige Materialien sind:
1. Polymere von Mono- und Diolefinen, beispielsweise Polypropylen, Polyisobutylen, Polybuten-1, Poly-4-methyl-penten-1, Polyisopren oder Polybutadien sowie Polymerisate von Cycloolefinen, wie z. B. von Cyclopenten oder Norbornen; ferner Polyethylen (das gegebenenfalls vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE).
   Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere radikalisch oder mittels Katalysator, wobei der Katalysator gewöhnlich ein oder mehrere Metalle der Gruppe IVb, Vb, VIb oder VIII enthält. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1. genannten Polymeren, z. B. Mischungen von Polypropylen mit Polyisobutylen, Polypropylen mit Polyethylen (z. B. PP/HDPE, PP/LDPE) und Mischungen verschiedener Polyethylentypen (z. B. LDPE/HDPE).
3. Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexandien, Dicyclopentadien oder Ethylidennorbornen; ferner Mischungen solcher Copolymere untereinander und mit unter 1. genannten Polymeren, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren, wie z. B. Polyamiden.
4. Kohlenwasserstoffharze, inklusive hydrierte Modifikationen davon (z. B. Klebrigmacherharze) und Mischungen von Polyalkylenen und Stärke.
5. Polystyrol, Poly-(p-methylstyrol), Poly-(α-methylstyrol).
6. Copolymere von Styrol oder α-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.
7. Pfropfcopolymere von Styrol oder α-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6. genannten Copolymeren, wie sie z. B. als sogenannte ABS-, MBS-, ASA- oder AES-Polymere bekannt sind.
8. Halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
10. Copolymere der unter 9. genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1. genannten Olefinen.
12. Homo- und Copolymere von cyclischen Ethern, wie Polyalkylenglykole, Polyethylenoxyd, Polypropylenoxyd, oder deren Copolymere mit Bisglycidylethern.
13. Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide z. B. ausgehend von p-Phenylendiamin und Adipinsäure; Polyamide, hergestellt aus Hexamethylendiamin und Iso- und/oder Terephthalsäure und gegebenenfalls einem Elastomer als Modifikator, z. B. Poly-2,4,4-trimethylhexamethylenterephthalamid oder Poly-m-phenylen-isophthalamid. Geeignet sind auch Block-Copolymere der vorstehend genannten Polyamide mit Polyolefinen, Olefin-Copolymeren, Ionomeren oder chemisch gebundenen oder gepfropften Elastomeren; oder mit Polyethern, wie z. B. mit Polyethylenglykol, Polypropylenglykol oder Polytetramethylenglykol. Geeignet sind ferner mit EPDM oder ABS modifizierte Polyamide oder Copolyamide; sowie während der Verarbeitung kondensierte Polyamide ("RIM-Polyamidsysteme").
17. Polyharnstoffe, Polyimide, Polyamidimide, Polyetherimide, Polyesterimide, Polyhydantoine und Polybenzimidazole.
18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.
19. Polycarbonate und Polyestercarbonate.
20. Polysulfone, Polyethersulfone und Polyetherketone.
21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
22. Trocknende und nicht-trocknende Alkydharze.
23. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
24. Vernetzbare Acrylharze, die sich von substituierten Acrylsäureestern ableiten, wie z. B. von Epoxyacrylaten, Urethanacrylaten oder Polyesteracrylaten.
25. Alkydharze, Polyesterharze und Acrylatharze, die mit Melaminharzen, Harnstoffharzen, Isocyanaten, Isocyanuraten, Polyisocyanaten oder Epoxidharzen vernetzt sind.
26. Vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-diglycidylethern, die mittels üblichen Härtern, wie z. B. Anhydriden oder Aminen mit oder ohne Beschleunigern vernetzt werden.
27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
28. Geeignet sind ganz allgemein binäre und polynäre Mischungen (Polyblends) der vorgenannten Polymeren, wie z. B. PP/EPDM, Polyamid/EPDM oder ABS, PVC/EVA, PVC/ABS, PVC/MBS, PC/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Bevorzugt sind teilchen-, linien-, flächenförmige oder dreidimensionale Gebilde, die wenigstens ein polymeres Material umfassen, das ausgewählt ist unter Polyolefinen, Polyestern, Polyamiden, Polyacrylnitril, Polyaromaten, Styrol-Acrylnitril-Copolymeren (SAN), Acrylnitril-Butadien-Styrol-Copolymeren (ABS), Polyurethanen und Mischungen (Polyblends) der vorgenannten Polymeren.

Mit Vorteil werden linien- und flächenförmige textile Gebilde, die aus Kunststofffasern aufgebaut sind, insbesondere solchen aus Polyolefinen, wie Polyethylen und Polypropylen, Polyestern, Polyacrylnitril und Polyamiden, wie z. B. Polyamid 6 und Polyamid 66, erfindungsgemäß hydrophiliert.

Geeignete flächenförmige Gebilde sind ferner Filme oder Folien. Diese umfassen vorzugsweise ein Polymer, das ausgewählt ist unter Polyolefinen, wie Polyethylen und/oder Polypropylen, Polymeren halogenierter Monomere, wie z. B. Polyvinylchlorid und/oder Polytetrafluorethylen, Polyestern und Mischungen davon. Durch die erfindungsgemäße Hydrophilierung wird deren Bedruckbarkeit und Klebbarkeit sowie deren antistatischen Eigenschaften verbessert.

Dreidimensionale Gebilde, d. h. Formkörper, deren Oberflächen erfindungsgemäß hydrophiliert werden können, umfassen vorzugsweise wenigstens ein polymeres Material, das ausgewählt ist unter Polyolefinen, wie z. B. Polyethylen und/oder Polypropylen, Polyaromaten, wie Polystyrol, Polymeren halogenierter Monomerer wie Polyvinylchlorid und/oder Polytetrafluorethylen, Polyestern, polyacrylnitril, Styrol-Acrylnitril-Copolymeren (SAN), Acrylnitril-Butadien-Styrol-Copolymeren (ABS), Polyamiden, wie Polyamid 6 und/oder Polyamid 66, Polyurethanen und Mischungen davon. Die Verwendung der erfindungsgemäßen Polyaminoamide mit Seitenketten der Formel I, II und/oder III führt bei Formkörpern ebenfalls zu einer Verbesserung der Oberflächeneigenschaften, so dass diese besser bedruckbar oder beklebbar sind und bessere antistatische Eigenschaften besitzen.

Die Polyaminoamide mit Seitenketten der Formel I, II und/oder III können in Mischungen oder in Kombination mit oberflächenaktiven Substanzen, wie z. B. anionischen, nichtionischen oder kationischen Tensiden bzw. Netzmitteln, eingesetzt werden. Sie können auch in Mischung mit weiteren Polymeren eingesetzt werden, wobei dadurch unter Umständen noch eine Verstärkung der oberflächenmodifizierenden Wirkung erzielt werden kann.

Die Ausrüstung der teilchen-, linien-, flächenförmigen oder dreidimensionalen Gebilde mit den erfindungsgemäß verwendeten Polyaminoamiden kann nach den Verfahren erfolgen, wie man sie üblicherweise zur Hydrophilierung der vorgenannten Gebilde mit Hydrophiliermitteln des Standes der Technik anwendet. Üblicherweise behandelt man hierzu das Gebilde mit einer verdünnten, vorzugsweise wässrigen Lösung des Polyaminoamids in einer für die Art des Gebildes üblichen Weise, z. B. durch Spülen, Tauchen, Besprühen, Bepflatschen, oder ähnlichen Methoden, wie sie üblicherweise bei der Ausrüstung von textilen Geweben oder Folien eingesetzt werden. Der Gehalt der Lösungen an erfindungsgemäß verwendeten Polyaminoamiden liegt in der Regel im Bereich von wenigstens 0,01 bis 20 Gew.-% und vorzugsweise 0,05 bis 15 Gew.-% und insbesondere 0,1 bis 10 Gew.-%, bezogen auf das Gewicht der Lösung. Vorzugsweise setzt man zur Behandlung wässrige Lösungen der Polyaminoamide ein. Die zur Hydrophilierung erforderliche Menge an erfindungsgemäß verwendeten Polyaminoamiden wird von der Oberfläche absorbiert und verbleibt nach dem Trocknen auf ihr haften. Die zur Erzielung einer wirksamen Hydrophilierung erforderlichen Mengen stellen sich dabei automatisch ein und sind äußerst gering. Bei Gebilden mit glatter Oberfläche wie Folien und ähnlichen Gebilden reichen bereits 0,1 mg/m² Polyaminoamide aus.

Alternativ kann man die erfindungsgemäß verwendeten Polyaminoamide auch dem Werkstoff, aus dem das Gebilde aufgebaut ist, zusetzen und anschließend hieraus das Gebilde herstellen. Beispielsweise kann man bei Ausrüstung von thermoplastischen Kunststoffen ein erfindungsgemäß verwendetes Polyaminoamid als Feststoff mit dem Kunststoffmaterial kompoundieren. Das so ausgerüstete Kunststoffmaterial wird dann nach den üblichen Verfahren zu Folien, beispielsweise durch Extrusion, oder zu Fasermaterialien, beispielsweise durch ein Schmelzspinnverfahren weiter verarbeitet.

Die einfache Anwendbarkeit der erfindungsgemäß verwendeten Polyaminoamide erlaubt den Einsatz in vielen Anwendungsbereichen, beispielsweise als Hydrophiliermittel für Vliesstoffe, die z. B. in Windeln, Hygieneeinlagen, Textilien, Landwirtschafts- oder Geotextilien oder Filteranlagen eingesetzt werden. Die erfindungsgemäß hydrophilierten Kunststofffasern können ihrerseits zu Geweben und zu Textilien weiterverarbeitet werden. Hierdurch wird die Wasserdampfdurchlässigkeit und der Kapillartransport von Schweiß verbessert sowie das Anschmutzverhalten gegenüber vielen hydrophoben Schmutzarten verringert. Außerdem wird die Wiederablösbarkeit von Schmutz positiv beeinflusst. Weiterhin kann man die erfindungsgemäß verwendeten Polyaminoamide als Antistatikausrüstung für Kunststofffolien oder Siliziumwafer verwenden.

Ein geeignetes Maß zur Beurteilung der Hydrophilie/Hydrophobie der Oberfläche eines teilchen-, linien-, flächenförmigen oder dreidimensionalen Gebildes ist die Messung des Randwinkels von Wasser an der jeweiligen Oberfläche (siehe z. B. Römpp, Chemielexikon, 9. Auflage, S. 372 "Benetzung", Georg Thieme Verlag (1995). Dabei spricht man in der Regel von hydrophoben Oberflächen, wenn der Kontaktwinkel von Wasser größer als 90° ist. Bevorzugt bewirkt der Einsatz der Polyaminoamide mit Seitenketten der Formel I, II und/oder III eine Abnahme des Randwinkels um mindestens 5°, bevorzugt um mindestens 10°, gegenüber der unmodifizierten hydrophoben Oberfläche.

Vorteilhafterweise zeichnen sich die erfindungsgemäß eingesetzten Polyaminoamide sowie mit ihnen oberflächen-hydrophilierten Gebilde durch eine besonders gute Verträglichkeit mit Polymerschmelzen aus. Sie eignen sich somit in der Regel auch als Additive zu einer Schmelze von polymeren Faser- bzw. Formkörperrohstoffen. Sie können jedoch auch als Nachbehandlungsmittel zur Modifizierung der Gebilde eingesetzt werden.

Die im Folgenden angegebenen Beispiele sollen die Erfindung verdeutlichen, ohne sie jedoch einzuschränken:

### I. Messmethoden

### I.1 Randwinkelmessung

Das jeweilige Substrat wird mit einer 0,5 gew.-%igen Lösung des erfindungsgemäßen Polyaminoamids 30 Minuten bei 21 °C unter Rühren behandelt. Die Probe wird unmittelbar nach der Behandlung getrocknet. An der Probe wurde der Randwinkel mit destilliertem Wasser bei Raumtemperatur bestimmt.

### I.2 Messung der Hydrophilie

Die Messung erfolgte an einem Polypropylenvlies. Hierzu wurde das Vlies mit einer wässrigen, 0,5 gew.-%igen Lösung des erfindungsgemäßen Polyaminoamids behandelt und anschließend getrocknet. Auf das zu messende Substrat wird ein Tropfen Wasser aufgesetzt. Die Benetzung des Vlieses durch das Wasser wird visuell mittels einer Punkteskala von 1 bis 10 beurteilt. Hierbei bedeuten 0 Punkte keine Benetzung und 10 Punkte ein sofortiges Zerlaufen des Tropfens.

### I.3 Bestimmung der Affinität durch Reflektometrie

Wie von J.C. Dijt et al., Colloids Surf. 51 (1990) 141, beschrieben, wird ein Polypropylenfilm, der auf einem Siliziumwafer aufgebracht wurde, mit einer wässrigen Polymerlösung in einer Konzentration von 0,05 Gew.-% in Kontakt gebracht. Durch Analyse der Polarisationsrichtung eines reflektierten Laserstrahls kann die adsorbierte Menge in situ bestimmt werden.

### II. Herstellungsbeispiele

### Beispiel 1: Pentoxyliertes Polyaminoamid (>90 % der aminischen Stickstoffe umgesetzt)

1357 g einer 60 %igen wässrigen Polyaminoamid-Lösung (Adipinsäure-Diethylentriamin-1:1-Kondensat, Aminogruppen im Ansatz n = 3,82 Mol) und 329 g (3,82 Mol) 1,2-Pentenoxid wurden bei 30 °C in einem 2 1-Metallreaktor vorgelegt und anschließend dreimal mit jeweils 5 bar Stickstoff inertisiert. Der Reaktorinhalt wurde unter Rühren auf 90 °C erhitzt und 24 h bei 90 °C gehalten. Nach dem Abkühlen und Entspannen des Reaktors wurde eine klare, viskose Lösung von brauner Farbe erhalten.

### Beispiel 2: Propoxyliertes Polyaminoamid (ca. 50 % der aminischen Stickstoffe umgesetzt)

2982 g einer 57 %igen wässrigen Polyaminoamid-Lösung (Adipinsäure-Diethylentriamin-1:1-Kondensat, Aminogruppen im Ansatz n = 8,02 Mol) wurden bei 70 °C in einem 5 1-Metallreaktor vorgelegt und anschließend dreimal mit jeweils 5 bar Stickstoff inertisiert. Der Reaktorinhalt wurde auf 80 °C erhitzt und anschließend 233 g (4,01 Mol) Propenoxid zudosiert, bis ein Druck von 5 bar erreicht war. Anschließend wurde bis zur Druckkonstanz nachgerührt. Nach dem Abkühlen und Entspannen des Reaktors und Entgasen am Rotationsverdampfer bei 50 °C und 500 mbar wurde ein propoxyliertes Polyaminoamid erhalten, bei dem jedes zweite Amin modifiziert war.

### Beispiel 3:

In einer 1 1-Rührapparatur wurden 103,3 g Diethylentriamin vorgelegt und unter Stickstoff auf 120 °C erwärmt. Mit Erreichen dieser Temperatur wurden 116,2 g Hexansäure zugetropft und danach auf 170 °C aufgeheizt. Entstehendes Reaktionswasser destillierte ab. Nach Erreichen einer Säurezahl von ca. 10 mmol KOH/g ließ man auf 140 °C abkühlen und trug 146,2 g Adipinsäure ein. Nach erneutem Aufheizen auf 170 °C wurde solange Reaktionswasser abdestilliert, bis eine Säurezahl von 21,2 mg KOH/g und eine Aminzahl von 0,61 mmol N/g erreicht waren. Nach Abkühlen wurde durch Zugabe von entsalztem Wasser eine 40 %ige Lösung des mit Hexansäure modifizierten Polyaminoamids hergestellt.

### III. Anwendungstechnische Beispiele

### III.1 Messung des Randwinkels und der Oberflächenspannung

Die Messung des Randwinkels erfolgte wie zuvor beschrieben. Die Messung der Oberflächenspannung erfolgte an 0,1 gew.-%igen Lösungen in Wasser bei 23 °c nach DIN 53914. Die Ergebnisse sind in der folgenden Tabelle 1 wiedergegeben.

**Tabelle 1**

| Beispiel-Nr. | Additiv | Randwinkel | Oberflächenspannung (0,1 % Additiv in Wasser bei 23 °C nach DIN 53914) |
|---|---|---|---|
| (Vergleich) | kein Additiv | 105° | 72 mN/m (reines Wasser) |
| (Vergleich) | handelsübliches Alkoholethoxylat | 58° | 29 mN/m |
| (Vergleich) | handelsüblicher hydrophilierend wirkender Polyetherester | 86° | nicht gemessen |
| | Beispiel 1 | 24° | 34 mN/m |
| | Beispiel 2 | 28° | 55 mN/m |
| | Beispiel 3 | 41° | 58 mN/m |

### III.2: Messung der Hydrophilie

Die Messung der Hydrophilie erfolgte wie zuvor beschrieben. Die Ergebnisse sind in der folgenden Tabelle 2 wiedergegeben.

**Tabelle 2**

| Beispiel-Nr. | Additiv | Hydrophilie |
|---|---|---|
| (Vergleich) | kein Additiv | 0 |
| (Vergleich) | handelsüblicher, hydrophilierend wirkender Polyetherester | 3 |
| | Beispiel 1 | 8 |
| | Beispiel 2 | 9 |

### III.3: Bestimmung der Affinität

Eine 0,05 gew.-%ige Lösung des pentoxylierten Polyaminoamids aus Beispiel 1 wurde auf einen pH-Wert von 5 eingestellt. Anschließend wurde ein Polypropylen-modifizierter Siliziumwafer bei Raumtemperatur mit der so erhaltenen Lösung mit einer Flussrate von 0,7 ml/min senkrecht angeströmt. Durch die Absorption des Polymeren wird eine Veränderung des Detektionssignals gegenüber einer polymerfreien Lösung beobachtet. Durch eine computergestützte Modellierung des Strahlengangs erhält man aus dieser Veränderung eine Belegung von 0,8 mg/m². Diese Belegung nimmt nicht wesentlich ab, wenn man wieder polymerfreie Lösung an die Oberfläche strömen lässt.

Die anwendungstechnischen Beispiele zeigen, dass es mit den erfindungsgemäß verwendeten Polyaminoamiden möglich ist, Polypropylen-Oberflächen effektiv zu hydrophilieren. Dabei zeigt keines der erfindungsgemäßen Beispiele ein signifikantes Schäumvermögen, wohingegen das als Vergleichssubstanz eingesetzte handelsübliche Alkoholethoxylat, wie die üblichen aus dem Stand der Technik bekannten nichtionischen Tenside, ein starkes bis sehr starkes Schäumvermögen zeigt.

## Patentansprüche

1. Verwendung von Polyaminoamiden, worin wenigstens ein Teil der Amin-Stickstoffatome Reste der allgemeinen Formel I, II und/oder III trägt, zur Hydrophilierung der Oberfläche teilchen-, linien-, flächenförmiger oder dreidimensionaler Gebilde, 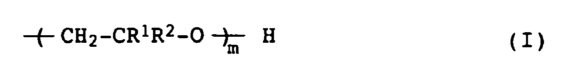 worin
R¹ für Wasserstoff, C₁-C₂₈-Alkyl, C₂-C₂₈-Alkenyl, C₆-C₁₆-Aryl oder C₇-C₁₆-Arylalkyl steht,
R² für Wasserstoff oder Methyl steht, und
m für 1 bis 100 steht;
R³-CO- (II)
worin
R³ für Wasserstoff, C₁-C₂₇-Alkyl, C₂-C₂₇-Alkenyl, C₆-C₁₆-Aryl oder C₇-C₁₆-Arylalkyl steht, wobei die Alkyl-, Alkenyl-, Aryl- und Arylalkylgruppen einen oder mehrere Substituenten tragen können, die unter Hydroxy, Alkoxy, Alkoxycarbonyl oder NE₁E₂ ausgewählt sind, worin E₁ und E₂ gleich oder verschieden sein können und für Wasserstoff, Alkyl oder Acyl stehen;
R⁴- (III)
worin
R⁴ für C₁-C₂₈-Alkyl, C₂-C₂₈-Alkenyl, C₆-C₁₆-Aryl oder C₇-C₁₆-Arylalkyl steht, wobei die Alkyl-, Alkenyl-, Arylund Arylalkylgruppen einen oder mehrere Substituenten tragen können, die unter Hydroxy, Alkoxy, Alkoxycarbonyl oder NE₁E₂ ausgewählt sind, worin E₁ und E₂ die bereits angegebene Bedeutung haben.

2. Verwendung nach Anspruch 1, wobei das Polyaminoamid Wiederholungseinheiten der allgemeinen Formel IV umfasst, 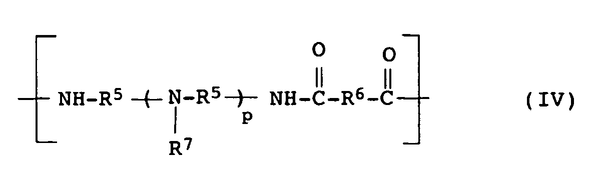 worin
p für eine ganze Zahl von 1 bis 20 steht,
R⁵ für gleiches oder verschiedenes C₂-C₈-Alkylen steht,
R⁶ für den Rest einer Dicarbonsäure steht,
R⁷ für Wasserstoff oder einen Rest der in Anspruch 1 angegebenen allgemeinen Formeln I, II und/oder III steht, wobei wenigstens ein Teil der Reste R⁷ von Wasserstoff verschieden ist.

3. Verwendung nach Anspruch 1 oder 2, wobei 5 bis 100 % der Amin-Stickstoffatome des Polyaminoamids einen Rest der Formel I, II und/oder III tragen.

4. Teilchen-, linien-, flächenförmiges oder dreidimensionales Gebilde, enthaltend zumindest auf seiner Oberfläche eine hydrophilierend wirkende Menge wenigstens eines Polyaminoamids, das aus Wiederholungseinheiten der allgemeinen Formel IV besteht, 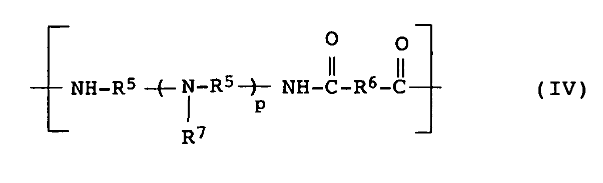 worin
p für eine ganze Zahl von 1 bis 20 steht,
R⁵ für gleiches oder verschiedenes C₂-C₈-Alkylen steht,
R⁶ für den Rest einer Dicarbonsäure steht,
R⁷ für Wasserstoff oder einen Rest der allgemeinen Formeln I und/oder III steht, wobei wenigstens ein Teil der Reste R⁷ von Wasserstoff verschieden ist, 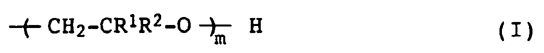
worin
R¹ für Wasserstoff, C₁-C₂₈-Alkyl, C₂-C₂₈-Alkenyl, C₆-C₁₆-Aryl oder C₇-C₁₆-Arylalkyl steht,
R² für Wasserstoff oder Methyl steht, und
m für 1 bis 100 steht;
R⁴- (III)
worin
R⁴ für C₁-C₂₈-Alkyl, C₂-C₂₈-Alkenyl, C₆-C₁₆-Aryl oder C₇-C₁₆-Arylalkyl steht, wobei die Alkyl-, Alkenyl-, Aryl- und Arylalkylgruppen einen oder mehrere Substituenten tragen können, die unter Hydroxy, Alkoxy, Alkoxycarbonyl oder NE₁E₂ ausgewählt sind, worin E₁ und E₂ gleich oder verschieden sein können und für Wasserstoff, Alkyl oder Acyl stehen.

5. Gebilde nach Anspruch 4 in Form eines linien- oder flächenförmigen textilen Gebildes.

6. Gebilde nach Anspruch 4, das aus Kunststofffasern aufgebaut ist.

7. Hygieneartikel, umfassend ein Gebilde nach Anspruch 5 oder 6.

8. Hygieneartikel, umfassend ein linien- oder flächenförmiges textiles Gebilde, das zumindest auf seiner Oberfläche eine hydrophilierend wirkende Menge wenigstens eines Polyaminoamids enthält, worin wenigstens ein Teil der Amin-Stickstoffatome Reste der allgemeinen Formel II trägt
R³-CO- (II)
worin
R³ für Wasserstoff, C₁-C₂₇-Alkyl, C₂-C₂₇-Alkenyl, C₆-C₁₆-Aryl oder C₇-C₁₆-Arylalkyl steht, wobei die Alkyl-, Alkenyl-, Aryl- und Arylalkylgruppen einen oder mehrere Substituenten tragen können, die unter Hydroxy, Alkoxy, Alkoxycarbonyl oder NE₁E₂ ausgewählt sind, worin E₁ und E₂ gleich oder verschieden sein können und für Wasserstoff, Alkyl oder Acyl stehen.

9. Hygieneartikel nach Anspruch 8, worin das linien- oder flächenförmige textile Gebilde aus Kunststofffasern aufgebaut ist.

## Claims

1. The use of polyaminoamides, in which at least some of the amine nitrogen atoms bear radicals of the formula I, II and/or III, for hydrophilicizing the surface of particulate, linear, sheet-like, or three-dimensional structures 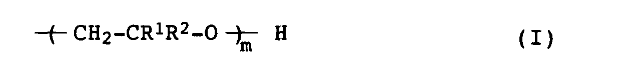 where
R¹ is hydrogen, C₁-C₂₈-alkyl, C₂-C₂₈-alkenyl, C₆-C₁₆-aryl, or C₇-C₁₆-arylalkyl,
R² is hydrogen or methyl, and
m is from 1 to 100;
R³-CO- (II)
where
R³ is hydrogen, C₁-C₂₇-alkyl, C₂-C₂₇-alkenyl, C₆-C₁₆-aryl or C₇-C₁₆-arylalkyl, where the alkyl, alkenyl, aryl, and arylalkyl groups may bear one or more substituents selected from the group consisting of hydroxyl, alkoxy, alkoxycarbonyl, and NE₁E₂, where E₁ and E₂ may be identical or different and are hydrogen, alkyl, or acyl;
R⁴- (III)
where
R⁴ is C₁-C₂₈-alkyl, C₂-C₂₈-alkenyl, C₆-C₁₆-aryl or C₇-C₁₆-arylalkyl, where the alkyl, alkenyl, aryl, and arylalkyl groups may bear one or more substituents selected from the group consisting of hydroxyl, alkoxy, alkoxycarbonyl, and NE₁E₂, where E₁ and E₂ are as defined above.

2. The use according to claim 1, where the polyaminoamide comprises repeat units of the formula IV 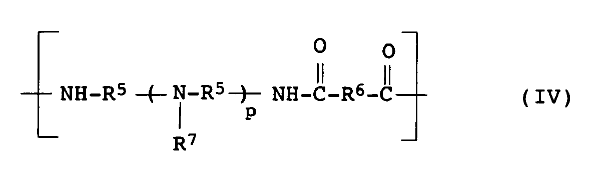 where
p is an integer from 1 to 20,
R⁵ is identical or different C₂-C₈-alkylene,
R⁶ is the radical of a dicarboxylic acid, and
R⁷ is hydrogen or a radical of the formulae I, II and/or III given in claim 1, where at least some of the radicals R⁷ are not hydrogen.

3. The use according to claim 1 or 2, where from 5 to 100% of the amine nitrogen atoms of the polyaminoamide bear a radical of the formula I, II and/or III.

4. A particulate, linear, sheet-like, or three-dimensional structure comprising, at least, on its surface, a hydrophilicizing amount of at least one polyaminoamide, in which is composed of repeat units of the formula IV 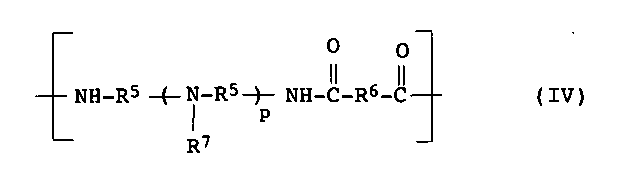 where
p is an integer from 1 to 20,
R⁵ is identical or different C₂-C₈-alkylene,
R⁶ is the radical of a dicarboxylic acid, and
R⁷ is hydrogen or a radical of the formulae I and/or III, where at least some of the radicals R⁷ are not hydrogen, 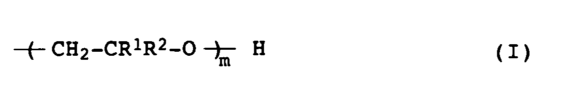
where
R¹ is hydrogen, C₁-C₂₈-alkyl, C₂-C₂₈-alkenyl, C₆-C₁₆-aryl, or C₇-C₁₆-arylalkyl,
R² is hydrogen or methyl, and
m is from 1 to 100;
R⁴- (III)
where
R⁴ is C₁-C₂₈-alkyl, C₂-C₂₈-alkenyl, C₆-C₁₆-aryl or C₇-C₁₆-arylalkyl, where the alkyl, alkenyl, aryl, and arylalkyl groups may bear one or more substituents selected from the group consisting of hydroxyl, alkoxy, alkoxycarbonyl, and NE₁E₂, where E₁ and E₂ may be identical or different and are hydrogen, alkyl, or acyl.

5. The structure according to claim 4, in the form of a linear or sheet-like textile structure.

6. The structure according to claim 4, built up from synthetic fibers.

7. A hygiene item comprising a structure according to claim 5 or 6.

8. A hygiene item comprising a linear or sheet-like textile structure which comprises, at least on its surface, a hydrophilicizing amount of at least one polyaminoamide, where at least some of the amine nitrogen atoms bear radicals of the formula II
R³-CO- (II)
where
R³ is hydrogen, C₁-C₂₇-alkyl, C₂-C₂₇₋alkenyl, C₆-C₁₆-aryl or C₇-C₁₆-arylalkyl, where the alkyl, alkenyl, aryl, and arylalkyl groups may bear one or more substituents selected from the group consisting of hydroxyl, alkoxy, alkoxycarbonyl, and NE₁E₂, where E₁ and E₂ may be identical or different and are hydrogen, alkyl, or acyl.

9. The hygiene item according to claim 8, in which the linear or sheet-like textile structure has been built up from synthetic fibers.

## Revendications

1. Utilisation de polyaminoamides, dans lesquels au moins une partie des atomes d'azote d'amine porte des radicaux des formules générales I, II et/ou III, 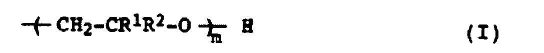 dans laquelle
R¹ représente de l'hydrogène ou un groupe alkyle en C₁-C₂₈, alcényle en C₂-C₂₈, aryle en C₆-C₁₆ ou arylalkyle en C₇-C₁₆,
R² représente de l'hydrogène ou du méthyle, et
m vaut 1 à 100,
R³-CO- (II)
dans laquelle
R³ représente de l'hydrogène ou un groupe alkyle en C₁-C₂₇, alcényle en C₂-C₂₇, aryle en C₆-C₁₆ ou arylalkyle en C₇-C₁₆, les groupes alkyle, alcényle, aryle et arylalkyle pouvant porter un ou plusieurs substituants qui sont choisis parmi des groupes hydroxy, alcoxy, alcoxycarbonyle ou NE₁E₂, où E₁ et E₂ peuvent être identiques ou différents et représenter de l'hydrogène ou un groupe alkyle ou acyle,
R⁴- (III)
dans laquelle
R⁴ représente un groupe alkyle en C₁-C₂₈, alcényle en C₂-C₂₈, aryle en C₆-C₂₆ ou arylalkyle en C₇-C₁₆, les groupes alkyle, alcényle, aryle et arylalkyle pouvant porter un ou plusieurs substituants qui sont choisis parmi des groupes hydroxy, alcoxy, alcoxycarbonyle ou NE₁E₂, où E₁ et E₂ ont la signification déjà indiquée,
pour rendre hydrophiles des surfaces d'articles de forme particulaire, linéaire ou plane ou tridimensionnels.

2. Utilisation suivant la revendication 1, dans laquelle le polyaminoamide comporte des unités répétitives de la formule générale IV : 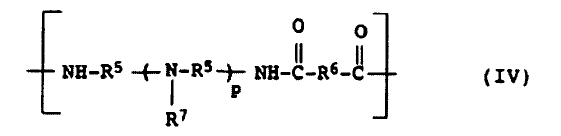 dans laquelle
p est un nombre entier de 1 à 20,
R⁵ représentent des groupes alkylène en C₂-C₈ identiques ou différents,
R⁶ représente le radical d'un acide dicarboxylique,
R⁷ représente de l'hydrogène ou un radical des formules générales I, II et/ou III indiquées dans la revendication 1, au moins une partie des radicaux R⁷ étant différente de l'hydrogène.

3. Utilisation suivant la revendication 1 ou 2, dans laquelle 5 à 100 % des atomes d'azote d'amine du polyaminoamide portent un radical de la formule I, II et/ou III.

4. Articles de forme particulaire, linéaire ou plane ou tridimensionnels contenant au moins sur sa surface une quantité, ayant pour effet de rendre hydrophile, d'au moins un polyaminoamide qui est constitué d'unités répétitives de la formule générale IV : 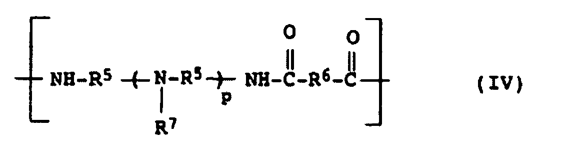 dans laquelle
p est un nombre entier de 1 à 20,
R⁵ représentent des groupes alkylène en C₂-C₈ identiques ou différents,
R⁶ représente le radical d'un acide dicarboxylique,
R⁷ représente de l'hydrogène ou un radical des formules générales I et/ou III, au moins une partie des radicaux R⁷ étant différente de l'hydrogène, 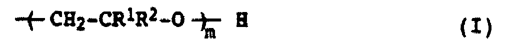
dans laquelle
R¹ représente de l'hydrogène ou un groupe alkyle en C₁-C₂₈, alcényle en C₂-C₂₈, aryle en C₆-C₁₆ ou arylalkyle en C₇-C₁₆,
R² représente de l'hydrogène ou du méthyle, et
m vaut 1 à 100,
R⁴- (III)
dans laquelle
R⁴ représente un groupe alkyle en C₁-C₂₈, alcényle en C₂-C₂₈, aryle en C₆-C₁₆ ou arylalkyle en C₇-C₁₆, les groupes alkyle, alcényle, aryle et arylalkyle pouvant porter un ou plusieurs substituants qui sont choisis parmi des groupes hydroxy, alcoxy, alcoxycarbonyle ou NE₁E₂, où E₁ et E₂ peuvent être identiques ou différents et représenter de l'hydrogène ou un groupe alkyle ou acyle.

5. Article suivant la revendication 4, sous la forme d'un article textile de forme linéaire ou plane.

6. Article suivant la revendication 4 qui est constitué de fibres synthétiques.

7. Article d'hygiène, comprenant un article suivant la revendication 5 ou 6.

8. Article d'hygiène, comportant un article textile de forme linéaire ou plane qui contient au moins sur sa surface une quantité, ayant pour effet de rendre hydrophile, d'au moins un polyaminoamide
dans lequel au moins une partie des atomes d'azote d'amine porte des radicaux de la formule générale II
R³-CO- (II)
dans laquelle
R³ représente de l'hydrogène ou un groupe alkyle en C₁-C₂₇, alcényle en C₂-C₂₇, aryle en C₆-C₁₆ ou arylalkyle en C₇-C₁₆, les groupes alkyle, alcényle, aryle et arylalkyle pouvant porter un ou plusieurs substituants qui sont choisis parmi des groupes hydroxy, alcoxy, alcoxycarbonyle ou NE₁E₂, E₁ et E₂ pouvant être identiques ou différents et représenter de l'hydrogène ou un groupe alkyle ou acyle.

9. Article d'hygiène suivant la revendication 8, dans lequel l'article textile de forme linéaire ou plane est constitué de fibres synthétiques.
